Europäisches Patentamt

European Patent Office

Office européen des brevets

(19)

(11) Publication number: **0 331 754**

**A1**

(12)

# EUROPEAN PATENT APPLICATION
## published in accordance with Art. 158(3) EPC

(21) Application number: 88907802.8

(51) Int. Cl.⁴: **G05B 19/403**

(22) Date of filing: 31.08.88

(86) International application number:
PCT/JP88/00877

(87) International publication number:
WO 89/02110 (09.03.89 89/06)

(30) Priority: 02.09.87 JP 220015/87

(43) Date of publication of application:
13.09.89 Bulletin 89/37

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: KAWAMURA, Hideaki
1375-5, Naraharamachi
Hachioji-shi Tokyo 193(JP)

Inventor: SASAKI, Takao
Estate Hachioji 2-502 469-4, Kobikimachi
Hachioji-shi Tokyo 193(JP)
Inventor: OTSUKI, Toshiaki
4-10-7, Shinmei
Hino-shi Tokyo 191(JP)
Inventor: ARIMOTO, Nozomu
Oak Village Hino 205 1184, Hino
Hino-shi Tokyo 191(JP)

(74) Representative: Brunner, Michael John et al
GILL JENNINGS & EVERY 53-64 Chancery
Lane
London WC2A 1HN(GB)

(54) CNC PROGRAM EXECUTION APPARATUS.

(57) A CNC program execution apparatus for executing custom software prepared by the user. The apparatus possesses a custom software execution unit (22) for storing both an interpreter (22c) and a machine language (22a) obtained by compiling the custom software or an intermediate language (22b) obtained by compiling the custom software, and an execution task control unit (21) including means for selecting either the machine language or the intermediate language for compilation. When the custom software is a small program and needs high-speed operation, it is compiled into the machine language for execution. When the custom software is a large program and can allow for relatively low speed, on the other hand, it is executed with the intermediate language and the interpreter. Therefore, the custom software can be processed at high speeds, and so is the custom program of a large amount.

FIG. I

## CNC PROGRAM EXECUTING APPARATUS

Technical Field

The present invention relates to a CNC program executing apparatus for executing custom software prepared by a user, and more particularly to a CNC program executing apparatus for executing custom software in an intermediate language or a machine language.

Background Art

In the art of computerized numerical control (CNC) systems, software which matches machines for use with computerized numerical control apparatus is being developed by machine manufacturers in order to allow the features of the machines to be fully used. Manufacturers of computerized numerical control systems make basic software for their computerized numerical control systems, and machine manufacturers produce software matching individual machines. The machine manufacturers can develop, stock, and sell machining know-how as machine-dedicated software, i.e., custom software.

Such custom software has heretofore been read by computerized numerical control systems and executed in the form of interpreters.

With interpreters used, however, it is time-consuming to read and interpret custom software, and a function for interpolating complex curves at a high speed cannot be performed at times. If all custom software instructions are compiled into a machine language, then the capacity of a memory for storing the custom software becomes insufficient.

Disclosure of the Invention

It is an object of the present invention to provide a CNC program executing apparatus which will solve the above problems and can execute custom software in either an intermediate language or a machine language.

To solve the above problems, there is provided a CNC program executing apparatus for executing custom software prepared by a user, comprising: a custom software executing unit for storing a machine language into which the custom software is compiled, or an intermediate language into which the custom software is compiled and an interpreter; and

selector means for selecting the machine language or the intermediate language when the custom software is to be compiled.

Whether the machine language or the intermediate language is to be used for executing the custom software can be determined dependent on the contents of the custom soft ware and the capacity of a memory. If the amount of program of the custom software is small and the program should be processed at a high speed, it is compiled into the machine language and executed. If the custom software has a large program amount and does not need to be processed at a high speed, the custom software is executed in the intermediate language and the interpreter.

Brief Description of the Drawings

FIG. 1 is a block diagram of an embodiment of the present invention; and
FIG. 2 is a block diagram of hardware of a computerized numerical control system for carrying out the present invention.

Best Mode for Carrying Out the Invention

An embodiment of the present invention will hereinafter be described with reference to the drawings.

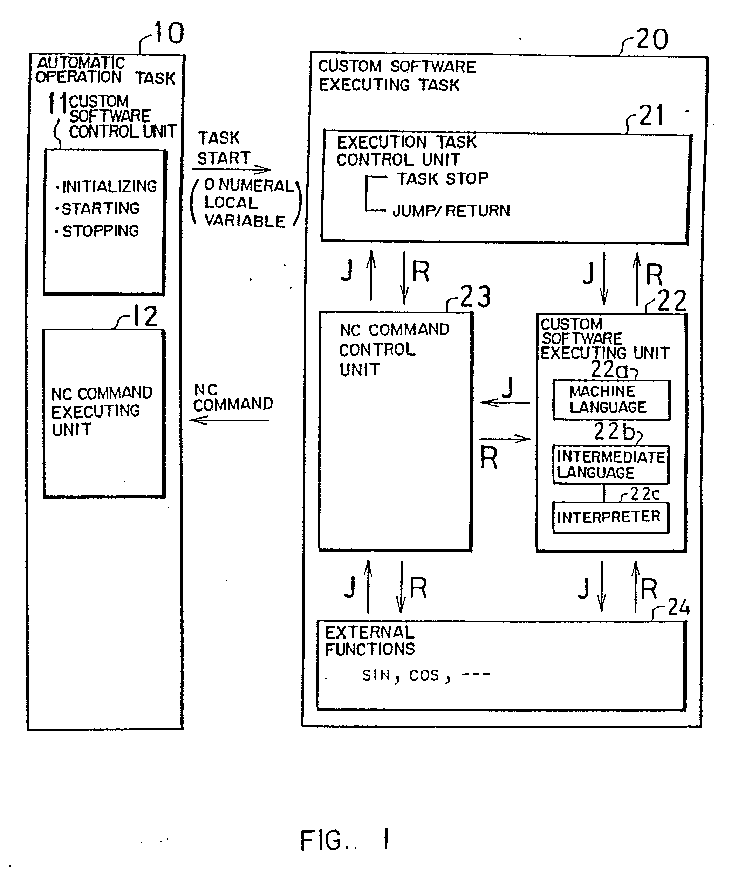

FIG. 1 shows an embodiment of the present invention in block form. Denoted at 10 is an automatic operation task which is a basic task for a computerized numerical control system and processes tasks required by any machine tools. The automatic operation task 10 is prepared by a manufacturer of computerized numerical control systems.

Denoted at 20 is a custom software executing task for executing custom software designed for individual machines. The custom software incorporates the functions of individual machines tools and know-how of a machine manufacturer, and is prepared by the machine manufacturer.

The automatic operation task 10 has a custom software control unit 11 for controlling custom software and an NC command executing unit 12. When the custom software control unit 11 reads a custom software instruction in commands, it transfers a program number (normally indicated by a numeral following "0") of the custom software and local variables to the custom software executing task 20 to start the custom software executing task 20. The NC command executing unit 12 executes ordinary NC commands.

The custom software executing task 20 comprises an execution task control unit 21, a custom software executing unit 22, an NC command control unit 23, and external functions 24.

The execution task control unit 21 controls the execution of the custom software, and is normally in a task stop condition. In response to a task start signal from the custom software control unit 11, a jump is made from the execution task control unit 21 to the custom software executing unit 22. When an execution is finished, a return is made to the execution task control unit 21 to enter the task stop condition, after which control goes back to the automatic operation task 10.

The letter "J" and its associated arrow mean a jump, and the letter "R" and its associated arrow mean a return.

The custom software executing unit 22 executes actual custom software. The manner in which the program of the custom software is to be compiled can be selected dependent on the capacity of the custom software and whether high-speed processing of the custom software is required or not. If the amount of the program is small and the program needs to be processed at a high speed, then the custom software is compiled into a machine language 22a. As a result, the custom software can be executed at a high speed, making it possible to interpolate complex curves at a high speed. However, the capacity of the required memory is large.

If the amount of the program of the custom software is comparatively large and the program does not require high-speed processing, the custom software is compiled into an intermediate language. Therefore, the program is executed by interpreting the intermediate language 22b with an interpreter 22c. The intermediate language 22b is an intermediate language dedicated to the computerized numerical control system, and can be interpreted at a considerably high speed as compared with the program of the original custom software.

Where there are a plurality of custom software programs, one of the custom software may be compiled into the machine language while the other into the intermediate language for execution dependent on the amounts of the programs and the need for high-speed processing.

When there is an NC command in the custom software, a jump is made from the custom software executing unit 22 to the NC command control unit 23. The NC command control unit 23 does not directly execute the NC command, but delivers the NC command to the NC command executing unit 12 in the automatic operation task 10 and puts the execution task control unit 21 in the task stop condition. The NC command executing unit 12 executes the NC command. When the execution of the NC command is finished, the custom software control unit 11 applies a task start signal to the execution task control unit 21 which then brings control back to the NC command control unit 23. If there is no other NC command, a return is made from the NC command control unit 23 to the custom software executing unit 22.

The external functions 24 are function routines such as a trigonometric function, an exponential function, and the like. A jump is made from the NC command control unit 23 to the custom software executing unit 22 for calculating a function, and a return is made to the NC command control unit 23 after the calculation.

As described above, dependent on the amount of the custom software and its contents, the custom software is compiled into the machine language or the intermediate language for high-speed execution.

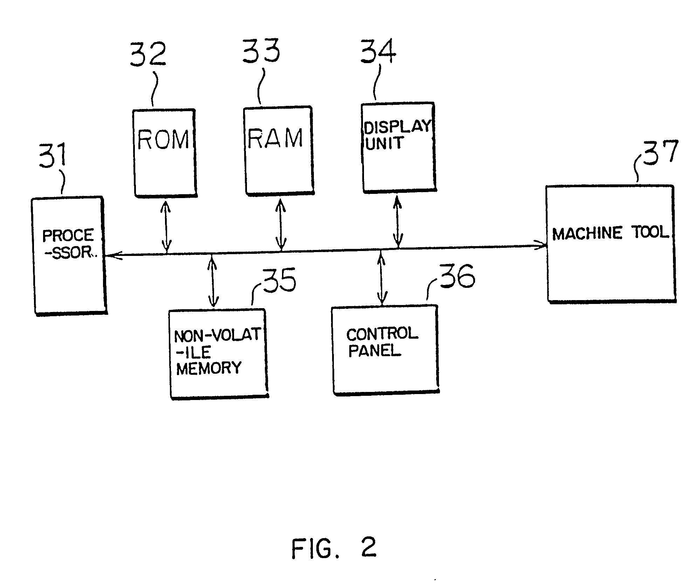

FIG. 2 schematically shows hardware of a computerized numerical control system for carrying out the present invention. The numerical control system includes a processor 31 for controlling the entire numerical control system, a ROM 32 for storing a system program, a RAM 33 for storing various data, a display unit 34 such as a CRT, a non-volatile memory 35 for storing custom software and a machining program, a control panel 36, and a machine tool 37.

With the present invention, as described above, custom software is compiled into a machine language or an intermediate language for execution. Therefore, the custom software can be executed at a high speed.

Claims

1. A CNC program executing apparatus for executing custom software prepared by a user, comprising:
a custom software executing unit for storing a machine language into which the custom software is compiled, or an intermediate language into which the custom software is compiled and an interpreter; and
selector means for selecting the machine language or the intermediate language when the custom software is to be compiled.

2. A CNC program executing apparatus according to claim 1, further comprising an NC command control unit for controlling the execution of an NC command contained in said custom software.

3. A CNC program executing apparatus according to claim 1, further comprising an external function for processing a function routine such as a trigonometric function or an exponential function contained in said custom software.

FIG.. 1

FIG. 2

EP 0 331 754 A1

# INTERNATIONAL SEARCH REPORT

International Application No   PCT/JP88/00877

**I. CLASSIFICATION OF SUBJECT MATTER** (if several classification symbols apply, indicate all) [6]

According to International Patent Classification (IPC) or to both National Classification and IPC

Int. Cl$^4$   G05B19/403

**II. FIELDS SEARCHED**

Minimum Documentation Searched [7]

| Classification System | Classification Symbols |
|---|---|
| IPC | G05B19/403, 19/18 |

Documentation Searched other than Minimum Documentation
to the Extent that such Documents are Included in the Fields Searched [8]

| Jitsuyo Shinan Koho | 1971 - 1988 |
| Kokai Jitsuyo Shinan Koho | 1971 - 1988 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, A, 62-75810 (Toshiba Corp.) 7 April 1987 (07. 04. 87) Page 2, upper left column, line 15 to lower left column, line 20 (Family: none) | 1 - 3 |
| A | JP, A, 62-166408 (Fanuc Ltd.) 22 July 1987 (22. 07. 87) Page 2, lower right column, line 15 to page 3, upper right column, line 11 (Family: none) | 1 - 3 |
| A | JP, A, 59-172008 (Mitsubishi Electric Corporation) 28 September 1984 (28. 09. 84) Page 2, upper left column, line 20 to lower left column, line 10 & DE, A, 3410430 | 1 - 3 |

[*] Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| November 4, 1988 (04. 11. 88) | November 21, 1988 (21. 11. 88) |

| International Searching Authority | Signature of Authorized Officer |
|---|---|
| Japanese Patent Office | |

Form PCT/ISA/210 (second sheet) (January 1985)